# EUROPEAN PATENT APPLICATION

(11) **EP 4 556 945 A1**
(43) Date of publication of application: **21.05.2025**
(21) Application number: 23209875.6
(22) Date of filing: 14.11.2023
(51) Int. Cl.: G01S 7/48, G01S 7/00, G01S 7/36, G01S 7/41, G01S 7/495, G01S 13/04, G01S 13/06, G01S 13/86, G01S 13/931, G01S 17/04, G01S 17/06, G01S 17/86, G01S 17/931, B60W 50/04

(54) **METHOD FOR ENABLING VERIFICATION OF DATA FROM A DETECTION SYSTEM OF A VEHICLE**

(71) Applicant: Volvo Car Corporation, 405 31 Göteborg (SE)
(72) Inventor: MORGAN, Jake, 40531 Göteborg (SE); HUANG, Sheng, 40531 Göteborg (SE); CLAUDIO, David, 40531 Göteborg (SE); SCHWARTZ, Isak, 40531 Göteborg (SE); WENG, Chenyang, 40531 Göteborg (SE)
(74) Representative: Maiwald GmbH

(57) **Abstract**

The disclosure relates to a method (100) for enabling verification of first data from a detection system (30) of a first vehicle (1), the method (100) comprising:
- receiving the first data from the detection system (30) of the first vehicle (1), the first data being indicative of one or more objects (3) in a surrounding of the vehicle (1), and the first data being at least partially based on a detection of the one or more objects (3) in the surrounding of the first vehicle (1) at random detection times of the detection system (30),
- receiving second data from a detection system (30) of the second vehicle (2), the second data being indicative of one or more objects (3) in the surrounding of the first vehicle (1), and
- comparing the first data to the second data.

## Description

### TECHNICAL FIELD

The present disclosure relates to a method for enabling verification of data from a detection system of a vehicle, a method configured to provide data from a detection system of a vehicle to another vehicle, and a corresponding computer program product as well as a corresponding data processing apparatus.

### BACKGROUND ART

Partial or fully autonomous driving capabilities of vehicles rely on detection systems by means of which objects in the surrounding of the vehicle may be detected. For example, a road to be travelled and other vehicles or objects on the road may be detected by such detection systems, enabling the partial or fully autonomous driving capabilities of vehicles.

Despite the advantages of partial or fully autonomous driving capabilities, such as an increased comfort for the driver of the vehicle, making the driving of the vehicle partially or fully autonomous may have its risks due to its dependency on a correct functioning of the detection system. For example, in cases where the detection system of the vehicle is malfunctioning or an external attack on the detection system is carried out, the detection system may provide false detection data, which may lead to a dangerous situation if it is not being recognized as false detection data and a partial or fully autonomous driving operation is carried out based on that.

### SUMMARY

The problem is at least partially solved or alleviated by the subject matter of the independent claims of the present disclosure, wherein further examples are incorporated in the dependent claims.

According to a first aspect, there is provided a method for enabling verification of first data from a detection system of a first vehicle, the method comprising:
- receiving the first data from the detection system of the first vehicle, the first data being indicative of one or more objects in a surrounding of the first vehicle, and the first data being at least partially based on a detection of the one or more objects in the surrounding of the first vehicle at random detection times of the detection system,
- receiving second data from a detection system of the second vehicle, the second data being indicative of one or more objects in the surrounding of the first vehicle, and
- comparing the first data to the second data.

Accordingly, the method provides for enabling verification of first data from a detection system of the first vehicle, which may be herein referred to also as an ego vehicle, by comparing it to second data from the detection system of the second vehicle. The first data and the second data may in particular be detection data, i.e., data including information about one or more objects as detected by the respective detection systems of the first vehicle and the second vehicle. For example, such data may include a position, e.g., absolute or relative to the respective vehicle of the detection system, a size, shape and/or classification, e.g., into a type of object, e.g., car, bicycle, pedestrian etc.

In particular, by comparing the first data to the second data, the verification of the first data may be enabled. The verification of the first data may be performed based on the comparing of the first data to the second data. The verification of the first data may be performed during the comparing of the first data to the second data and/or during a separate verification step of verifying the first data based on the comparison of the first data to the second data. The verification of the first data by the comparing of the first data to the second data may be a verifying or verification of the first data based on the second data. Thereby, the first data may be verified before or during a driving operation, in particular during a partially or fully autonomous driving operation of the first vehicle.

For example, the comparing, in particular verifying, of the first data may result in a determination that the first data is true or false. If the first data is determined to be true, i.e., the first data substantially corresponds or matches to the second data, an at least partially autonomous driving operation of the first vehicle may be performed based on that. Whether the first data substantially corresponds or matches to the second data may take into account a threshold for the correspondence or matching such that the compared data do not need to be exactly the same with regard to the one or more objects that they indicate, e.g., their position, size, shape and/or classification as described above, for example. However, in a case where the first data is determined to be false, the driving operation may not be performed based on the first data. Instead, for example, an at least partially autonomous driving operation may be cancelled, and the driver may be requested to perform the further driving operation manually. In this case, an error with the detection system of the first vehicle may be communicated to the driver, e.g., via a displayed error notice. Alternatively, an at least partially autonomous driving operation may be continued based on the second data, in particular if they substantially correspond and/or match to each other, for example.

The first data is at least partially based on a detection of the one or more objects in the surrounding of the first vehicle at random or, in other words, randomized detection times of the detection system. In other words, the detection of the one or more objects is based on at least two or more different detections, wherein the times of these at least two detections is chosen or generated at random or randomized. This is opposed to when the detection times are at predefined and/or fixed detection times or intervals therebetween as is generally the case with detection systems of vehicles. By basing the detection on random detection times of the detection system, the detection system may be less susceptible for an external attack. For example, the external attacker may not recognize the random detection times the detection of the detection system is based on and only send external attack signals at predefined or fixed times, e.g., normally corresponding to the detection times of typical detection systems. However, because the detection is based on the random detection times, the external attack may not actually influence the detection system or at least it may be recognized. Thereby, there is a greater chance that the first data is true and not manipulated by the external attack. This, together with the enabling of the verification of the first data by comparing it to the second data, overall increases the robustness of the first vehicle against external attacks aiming to manipulate the detection system of the first vehicle, which could potentially lead to an accident, in particular when the first vehicle is being driven at least partially autonomously. Similarly, the second data may be at least partially based on a detection of the one or more objects in the surrounding of the second vehicle at random detection times of the detection system of the second vehicle.

The first data is indicative of one or more objects in the surrounding of the vehicle. Accordingly, the detection data may comprise an indication of size, shape, categorization and/or position of the one or more objects of that surrounding. The categorization of an object may relate to categorizing an object, e.g., as another vehicle, a road lane marking, a traffic sign, a road object, an obstacle, a pedestrian, etc. The surrounding of the vehicle may correspond in size and location to a surrounding or detection area around, in particular ahead of, the first vehicle that is detectable by its detection system, which is typically technically limited and/or may be obstructed by other vehicles or objects.

The second data is indicative of one or more objects surrounding of the vehicle. The indication may be the same when no malfunction or external attack on the detection system of the first vehicle is present. However, alternatively, the indication may be different. For example, if the detection system experiences a malfunctioning or is externally attacked, it may detect an additional object indicated in the first data, which is not present in the second data. The indications may be indicative of the one or more objects in the surrounding of the first vehicle in particular at the time of recording and/or receiving the first data and the second data. Thereby, it may be possible to compare respective data in real time. Alternatively, it may be acceptable to have, e.g., predefined, time differences between the first data and the second data. This may be advantageous if there is no sufficient second data available at the current time, but a verification shall still take place based on the one or more objects in the surrounding as detected a few milliseconds or seconds ago by the second vehicle. Of course, when the second data is older, this may be taking into account in the comparing and/or verifying step of the method.

The first data as herein referred to may be intrinsic to the first vehicle or ego vehicle in the sense that it is detection data of that first vehicle. Accordingly, it may also be referred to as internal detection data, for example. The second data on the other hand may be extrinsic to the first vehicle or ego vehicle in the sense that it is the detection data from the second vehicle, which are other vehicles than the first vehicle. Accordingly, it may also be referred to as external detection data.

The first vehicle, and optionally the second vehicle or vehicles, may be configured for at least partial or full autonomous driving. With partial autonomous driving, certain driving functions such as lane holding assistant, adaptive cruise control and/or similar may be available. With full autonomous driving, the vehicle may be configured to drive fully autonomous without having the driver to observe the traffic and/or interact with the vehicle, at least for some time. Full autonomous driving may also be referred to as unsupervised autonomous driving. When the method is being performed, the first vehicle and/or the second vehicle may be in an at least partial or fully autonomous driving mode.

In an example, the random detection times may be based on a randomization of the timing of signals sent out by a LiDAR detection unit or radar detection unit of the detection system. Accordingly, when using a radar detection unit and/or a LiDAR detection unit in or as the detection system, timing of the pulses sent out by the detection unit may be randomized, making it difficult to be hit by a malicious signal from an external attack targeting the respective detection unit and/or producing inconsistent detection data, where the inconsistency in the first data may be used for identifying the external attack. For example, the randomized timing of the pulses sent out of the detection unit may be a randomization of the times at which the pulses are sent out. The potentially inconsistent detection data may be considered in the comparing and/or verifying step of the method, whereby the robustness of the detection system of the first vehicle may be increased. Additionally, or alternatively, the detection may be based on random detection times, where the detection of the one or more objects for the random detection times is included in the first data and potentially excluding other detection times, which are not random and may be more susceptible to an external attack, to avoid an infiltration of the detection system by the external attack. For example, the detection unit or one of multiple detection units of the detection system of the first vehicle may also be a camera detection unit, for example.

In an example, the comparing of the first data to the second data and/or the verifying of the first data may comprise determining a discrepancy between the first data and the second data based on the comparison of the first data to the second data, the determined discrepancy relating to the presence of an object in the surrounding of the vehicle. The determined discrepancy relates to the presence of an object in the surrounding of the vehicle. Accordingly, the first data or the second data may be indicative of an object at a certain location, where the respective other data may not indicate such object. The discrepancy may relate to a different location of the same object in the respective data or generally the presence of the object in the surrounding, for example. For example, the object according to the discrepancy may not exist in the real world but be falsely simulated to the respective detection system of the vehicle affected by the external attack. This may be a particularly dangerous situation as the first vehicle, in particular when being in an at least partially autonomous driving mode, may be required to perform dangerous maneuvers such as emergency braking based on the detected object, which may not be real and thus endanger other road participants due to its maneuver.

In an example, the method may further comprise:
- identifying an external attack against the detection system of the first vehicle based on the determined discrepancy.
For example, when an entire object is present in the first data but not in the second data, an external attack may be identified rather than an error of the detection system of the first vehicle. The advantage of identifying an external attack is that other causes for the discrepancy may be excluded such as that the detection system is faulty, thereby allowing the first vehicle to travel further with at least partially autonomous driving capabilities after the location of the attack was passed. Whether an external attack is identified or not may be based on predefined criteria of the discrepancy. For example, such predefined criteria may be that the discrepancy relates to the presence of an object on the road. Also, or alternatively, such predefined criteria may require a minimum size, one or more categories and/or one or more specific locations, e.g., ahead of the vehicle, for example. That is because typically, an external attack on the detection system, may try to severely interrupt the driving of the first vehicle rather than being of minimal impact thereto. Accordingly, there may be typical sizes or categories, such as a pedestrians or other vehicles, pretended to be on the road by the external attack, which, when identified as discrepancy, are more or most likely to be based on an external attack rather than other causes, e.g., a fault in the detection system.

In an example, the method may further comprise:
- providing the identified discrepancy for transmittal to the second vehicle.
Similarly, the identified discrepancy may be provided for transmittal to any further second vehicle. Thereby, it may be provided that the second vehicle(s) may be informed of the identified discrepancy. Correspondingly, the second vehicle and any further vehicle may verify whether its respective detection data is true or false and take appropriate measures, e.g., cancel an at least partially autonomous driving mode.

In an example, the method may further comprise:
- providing the first data for transmittal to the second vehicle.
Similarly, the first data may be provided for transmittal to any other further second vehicle. Accordingly, the second vehicle(s) may be provided with the first data from the first vehicle and verify its own detection data based on a comparison with the first data. Thereby, every vehicle sharing detection data with other vehicles in the vicinity of the surrounding may verify their detection data independently from one another. Thereby, it may be prevented that vehicles take actions based on false detection data from other vehicles.

In an example, the second data may be from detection systems of multiple second vehicles. In other words, the method may envision multiple second vehicles and second data from these second vehicles. Specifically, the method may include that the second data from further second vehicles may be received from these second vehicles. Such second data may be indicative of one or more objects in the surrounding of the first vehicle. Further, the checking of the first data may be done by comparing the first data to the multiple second data. By including such second data from further second vehicles, the reliability of the method for detecting a malfunction or external attack on the detection system of the first vehicle may be increased because more data from different detection systems is provided for the comparison, which may not be malfunctioning or being externally attacked.

In an example, the second data may be directly received from the second vehicle. This means that there may be no vehicle external instance, such as a server, in particular cloud server, or road infrastructure, in between the communication path between the first vehicle and the second vehicle. This allows for particularly fast transmission of second data and thereby as much real-time processing of the second data as possible given that the second data is typically relied upon in real time when driving the vehicle.

In an example, the first data may be based on at least two different detection units of the detection system of the first vehicle. Further, the at least two different detection units may be a camera detection unit and a LiDAR detection unit or a radar detection units. These detection units may be particularly susceptible to an external attack and thus the method may be particularly advantageous to be used when these detection units are employed.

In an example, the method may further comprise verifying individual data of the first data, the individual data being from each one of the at least two different detection units, by comparing the individual data to one another. Accordingly, the first data may be pre-verified by comparison of individual detection data from each one of the at least two different detection units. This pre-verification may be advantageous when only one of the two detection units has an error or is being attacked. Thereby, an error or attack may be recognized without (yet) using the second data. The result of such pre-verification may be logged or stored, e.g., to be later read out by a technician. Also, when using the second data, the result from the pre-verification may be verified, thereby increasing the level of confidence of the result of the overall checking.

The second data may be at least partially anonymized. One advantage thereof is that the second data may be shared with the vehicle without any particular restrictions, e.g., sharing sensible information with other vehicles. A further advantage may be that second data may be directly shared with the vehicle, e.g., without having a server in between and thereby as fast as possible in terms of a real time process. The at least partial anonymization may in particular relate to the content of the second data. The content may be obscured, replaced (e.g., by anonymized content) and/or deleted from the second data by means of the at least partial anonymization, for example.

Further, the at least partial anonymization of the second data may also or alternatively relate to the source of the second data, e.g., the second vehicle that provided the second data and/or the type of detection system by means of which it has been recorded. Thereby, in case the second data is faulty, e.g., due to a faulty detection system of the second vehicle, the driver of the first vehicle may not make the driver or manufacturer of the second vehicle liable for the second data that they shared, e.g., when the first vehicle is involved in an accident and the second data may have been a cause of that. Thereby, the acceptance of sharing the second data may be increased, for which it would otherwise be difficult to find acceptance given this potential issue.

The at least partial anonymization of the second data may be based on a real-time processing of the second data. For example, real-time image and/or sensor processing may be performed, if the second data comprises image and/or (other) sensor data. For this purpose, a detection model may be employed, which may be configured to identified sensible content, e.g., information or objects, in the second data. Sensible content may be predefined as later explained herein exemplary, e.g., faces of people and/or license plates of vehicles. The detection model or a further employed anonymization model may be configured to anonymize the content in the second data, which has been identified as sensible content. The detection model and/or the anonymization model may be artificial intelligence models, e.g., machine learning models, and may be pre-trained with previously recorded detection or second data to identify and/or anonymize sensible content therein. Accordingly, any of the herein described methods may comprise the step of identifying sensible content and/or anonymizing the identified sensible content, in particular as described herein.

In an example, the at least partially anonymized second data may comprise at least partially anonymized number plates of vehicles as objects in the surrounding and/or at least partially anonymized faces of persons, e.g., pedestrians or inside the vehicles, as objects in the surrounding. The aforementioned are examples of content that may be particularly sensible for sharing them with other vehicles.

According to a second aspect, there is provided a method configured to provide first data from a detection system of a first vehicle to a second vehicle, the method comprising:
- receiving first data from the detection system of the first vehicle, the first data being indicative of one or more objects in a surrounding of the vehicle, and the first data being at least partially based on a detection of the one or more objects in the surrounding of the first vehicle at random detection times of the detection system, and
- providing the received first data for transmittal to the second vehicle.

In terms of the method of the first aspect, herein referred to as the "method" or first method in the below detailed description, in the method of the second aspect, herein referred to also as the "further method" or second method in the below detailed description, the first data and the first vehicle mentioned in the further method may be the second data and the second vehicle of the method of the first aspect. Similarly, the at least one second vehicle of the further method may be the first vehicle of the method of the first aspect.

Any of the aspects or examples described herein with respect to the method of the first aspect may be applied to the further method or, in other words, method of the second aspect and vice versa. For example, the further method of the second aspect may comprise, as separate step, the at least partial anonymization of the first data as described above.

The method of the first aspect and/or the method of the second aspect may be at least partly computer-implemented, and may be implemented in software or in hardware, or in software and hardware. Accordingly, any one of the steps of the respective method may be carried out by a computer. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

Any of the computer-carried out steps in any one of the method and the further method may be consequently followed, paralleled and/or preceded by a not-computer-executed step or, in other words, step of a unit, system or similar of the vehicle, which is not the computer, or the vehicle itself. For example, the step of receiving of the respective data from the detection system in the method of the first aspect may be preceded and/or paralleled by recording the data by the detection system. Further, for example, the step of receiving the second data in the method of the first aspect may be preceded and/or paralleled by receiving the second data from the second vehicle via a communication unit of the first vehicle, e.g., based on cellular communication, Wi-Fi communication, or any other wireless communication standard. Similarly, in the further method of the first aspect, the step of receiving the first data may be preceded and/or paralleled by recording the first data by the detection system and the step of providing the received first data may be followed and/or paralleled by transmitting the received first data to the second vehicle, e.g., via the above-mentioned communication unit.

According to a third aspect, there is provided a computer program product comprising instructions which, when the program is executed by a computer, cause the computer to carry out the method of the first aspect or the method of the second aspect of this disclosure. The computer program product may be a computer program, in particular as such, or a product, e.g., a computer readable medium, comprising the computer program or, in other words, the instructions.

According to a fourth aspect, there is provided a data processing apparatus comprising means for carrying out the method of the first aspect or the method of the second aspect of this disclosure. The means may be a processor and/or the computer program product of the third aspect of this disclosure, for example.

According to a fifth aspect, there may be a vehicle comprising the data processing apparatus.

It should be noted that the above examples may be combined with each other irrespective of the aspect involved. Accordingly, the methods may be combined with structural features and, likewise, the computer program product, the data processing apparatus and the vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a first method of this disclosure;
- Figure 2: shows a schematic illustration of a second method of this disclosure;
- Figure 3: shows a schematic illustration of a vehicle to be used for any one of the methods of Figs. 1 and 2;
- Figure 4: shows a schematic illustration of a driving situation in which any one of the methods of Figs. 1 and 2 may be used; and
- Figure 5: shows a schematic illustration of communication between the vehicles shown in the driving situation of Fig. 5.

### DETAILED DESCRIPTION

The Figures are merely schematic representations and serve only to illustrate examples of the disclosure. Identical or equivalent elements are in principle provided with the same reference signs.

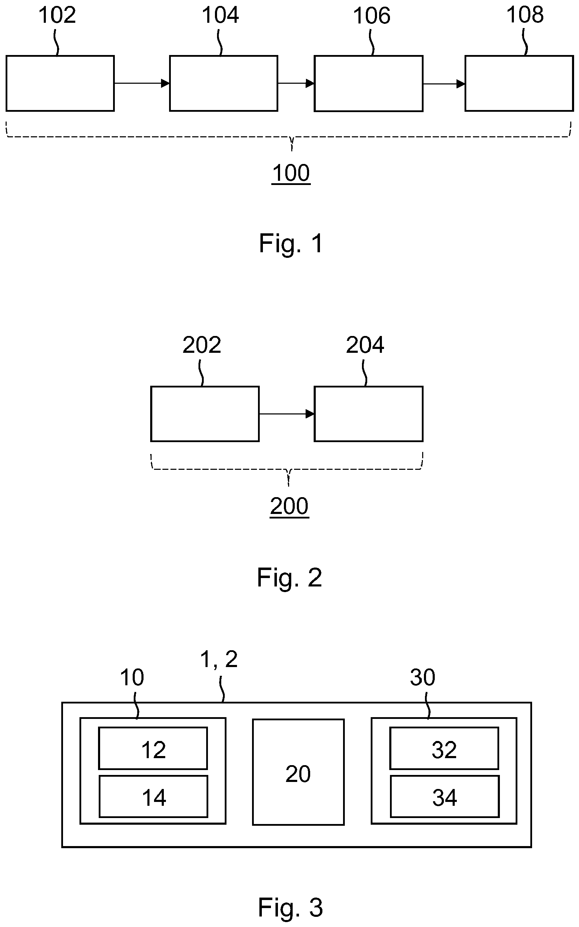

Figure 1 shows a schematic illustration of a first method 100 of this disclosure. The method 100 may be carried out by the first vehicle 1 as shown in Fig. 3, in particular the data processing apparatus 10 of the first vehicle 1 as seen in Fig. 3. The first vehicle 1 is also referred to as an ego vehicle 1 as it may be the first vehicle 1, specifically a data processing apparatus 10 thereof, which may carry out the first method 100 and/or second method 200.

The data processing apparatus 10 may comprise a processor 12 and a computer program product 14, the instructions of which may be executed by the processor 12, as seen in Fig. 3, to carry out the first method 100 and/or the second method 200.

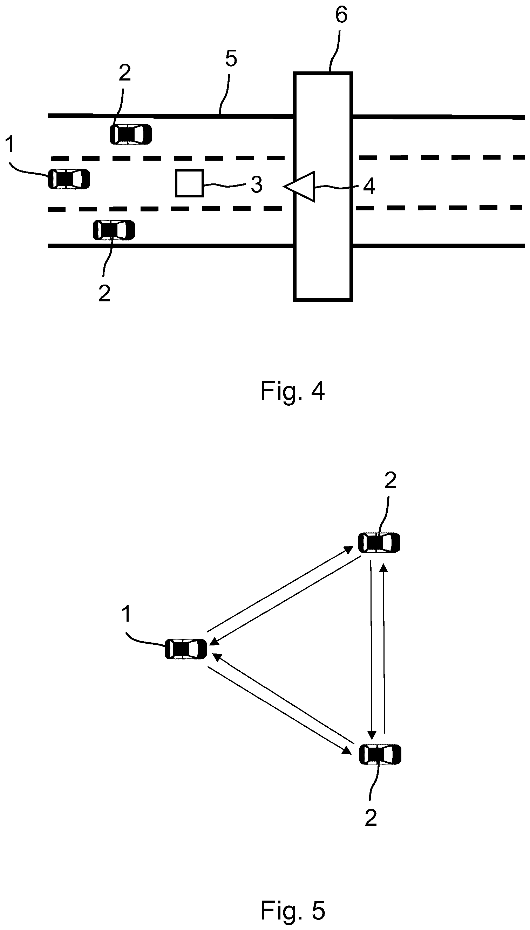

In a step 102 of the first method 100, first data in the form of detection data from a detection system 30 (see Fig. 3) of the vehicle 1 is being received by the data processing apparatus 10. The first data may be indicative of a surrounding of the vehicle 1, in particular of one or more objects in that surrounding, in a current driving situation, such as the one shown in Fig. 4. The surrounding may be corresponding or covered by a detection area of the detection system 30, in which the detection system 30 is able to detect the surrounding at a given time, in particular objects in the surrounding. A corresponding detection of the surrounding of the first vehicle 1 may be preceded and/or paralleled to the receiving of the first data by the data processing apparatus 10.

As shown in the exemplary driving situation of Fig. 4, showing the first vehicle 1 as well as two second vehicles 2, which optionally may be partially or fully configured with the components of Fig. 3 and as indicated by the reference sign 2 referring thereto, the first vehicle 1 may be travelling a road 5 while receiving the detection data according to step 102. In the example of Fig. 4, an object 3 is detected on the lane travelled by the first vehicle 1 ahead of the first vehicle 1 by the detection system 30. Accordingly, the received first data may comprise the presence of the object 3 as content. Further, a size, categorization, e.g., as a pedestrian, and/or the location of the object 3 may be included in the first data.

However, the object 3 may not be real and not detected by respective detection systems 30 of the second vehicles 2, which are located on lanes next to the first vehicle 1 and should be able to detect the object 3. Instead, the object 3 may be the result of an external attack on the detection system 30 of vehicle 1. For example, an attack device 4 may be located on a bridge 6 above the travelled road 5 as seen in Fig. 4. This attack device 4 may let the detection system 30 of the first vehicle 1 falsely identify the object 3 and be targeted towards the detection system 30 of the vehicle 1, e.g., one or two detection units 32, 34 thereof, such as a LiDAR detection unit, for example. For example, the attack device 4 may be designed to generate fake obstacles as objects using pulsed light patterns.

The detection system 30 of the first vehicle 1 may be configured to detect its surrounding or objects therein at random detection times of its detection system 30, e.g., based on a randomization of the timing of signals sent out by its LiDAR detection unit and/or radar detection unit. Thereby, the chances for an external attack to be successful may be substantially limited. However, even if an external attack manages to trick the detection system 30 despite the random detection times, the method 100 is sufficiently robust to identify the external attack despite and thereby prevent any potentially dangerous situation.

For example, the first vehicle 1 may be partially or fully autonomously driven, e.g., by the data processing apparatus 10 or any other and/or further data processing apparatus. In this case, the vehicle 1, based on the detected presence of object 3 according to the received detection data, may perform a dangerous maneuver to prevent a collision with the object 3 and possibly endanger the occupants of the first vehicle 1 as well as the other road participants, such as the second vehicles 2, without being necessary based on the fact that the object 3 is not real.

To prevent the first vehicle 1 and the other road participants from a dangerous situation, the first data from the detection system 30 of the vehicle 1 is verified based on a comparison with second data, e.g., in the form of detection data, from the detection systems 30 of one or both second vehicles 2 in the vicinity of the first vehicle 1. At least one or both detection systems 30 of the second vehicles 2 are able to detect the area in which the object 3 is supposed to be located.

For this purpose, in a step 104 of the first method 100, the data processing apparatus 10 receives the second data from the detection systems 30 of the second vehicles 2. The second data may be indicative of a surrounding of the second vehicles 2, in particularly overlapping at least partially the surrounding or detection area of the first vehicle 1. Also, the second data may be at least partially anonymized. E.g., when the second data comprises images, faces of people and/or license plates of vehicles, may be obscured, deleted or similarly anonymized. Then, the second data may be shared directly between the respective vehicles 1, 2 as shown in Fig. 5. Similarly, when the first data from the first vehicle 1 is shared with the second vehicles 1, 2, the first data may be at least partially anonymized.

For the receiving of the respective data, a communication unit 20, which may be based on a wireless communication, of the vehicles 1, 2 may be used. Accordingly, respective detection data may be shared between the vehicles 1, 2 as shown in Fig. 5 and both ways. The second data in the case of the first method 100 of Fig. 1 may thereby be received by the communication unit 20 of the first vehicle 1 and forwarded to the data processing apparatus 10, which receives the second data from the communication unit 20.

Such receival of second data occurs directly from the second vehicles 2, as there is no other external server, road infrastructure or similar employed in the process. However, alternatively, it may be possibly to transmit the second data indirectly, e.g., via an external structure, e.g., a cloud server or road infrastructure. In such a case, anonymization may be performed by the external structure rather than on the second vehicles 2.

Then, in a step 106 of the first method 100, the data processing apparatus 10 may verify its own or internal detection data by comparing the received first data with the received second data, which is external detection data from the second vehicles 2. Thereby, the first method 100 may determine a discrepancy between the received first data and the received second data.

In the example of Fig. 4, the first method 100 may determine the discrepancy as presence of object 3, which is included as content in the first data of the first vehicle 1 but not in the second data of the second vehicles 2. Thereby, the first method 100 may identify occurrence of the external attack against its own detection system 30 and take appropriate measures, e.g., not take any dangerous measures and/or switch to manual driving operation.

Further, as shown in Fig. 1, the first method 100 may comprise providing the received first data for transmittal, via the communication unit 20, to one or both second vehicles 2. Also, or alternatively, the identified discrepancy may be provided for transmittal, via the communication unit 20, to one or both second vehicles 2 in Fig. 4.

Accordingly, not only may generally the safety of the first vehicle 1 be increased but the second vehicles 2 may employ the same first method 100 and thereby verify or, in other words, validate or audit their own detection data by means of external detection data from other vehicles 1, 2.

Alternatively, the second vehicles 2 may not employ the first method 100, which is herein referred to as a first method 100 merely to distinguish it from the method 200 of Fig. 2, which is herein referred to also as a second method 200. Instead, one or both second vehicles 2 may employ the second method 200 of Fig. 2.

In step 202 of the second method 200, second data from the detection system 30 of the second vehicle 2 is being received, the second data being indicative of a surrounding of the second vehicle 2, where the second data may be at least partially anonymized. Then, in step 204 of second method 200, the second data is provided for transmittal, by the communication unit 20 of the second vehicle 2, to the first vehicle 1, which is received there as second data and used in the first method 100 as explained above. Additionally, or alternatively to the partial anonymization, the second data may be based on a detection of the one or more objects in the surrounding of the first vehicle 1 at randomized detection times of the detection system 30.

As shown in Fig. 3, the first data and/or the second data may be from at least two different detection units 32, 34 of the detection system 30, which may be a camera detection unit and a LiDAR detection unit or radar detection unit, for example. The first data and/or second data may optionally be pre-verified by comparison of individual detection data from each one of the at least two different detection units 32, 34 in the first method 100 and/or second method 200.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: first vehicle
- 2: second vehicle
- 3: object
- 4: attack device
- 5: road
- 6: bridge
- 10: data processing apparatus
- 12: processor
- 14: computer program product
- 20: communication unit
- 30: detection system
- 32, 34: detection units
- 100: first method
- 102-108: steps of the first method
- 200: second method
- 202, 204: steps of the second method

## Claims

1. A method (100) for enabling verification of first data from a detection system (30) of a first vehicle (1), the method (100) comprising:
- receiving the first data from the detection system (30) of the first vehicle (1), the first data being indicative of one or more objects (3) in a surrounding of the first vehicle (1), and the first data being at least partially based on a detection of the one or more objects (3) in the surrounding of the first vehicle (1) at random detection times of the detection system (30),
- receiving second data from a detection system (30) of the second vehicle (2), the second data being indicative of one or more objects (3) in the surrounding of the first vehicle (1), and
- comparing the first data to the second data.

2. The method (100) of claim 1, the random detection times being based on a randomization of the timing of signals sent out by a LiDAR detection unit or radar detection unit of the detection system (30).

3. The method (100) of claim 1 or 2, the comparing of the first data to the second data comprising determining a discrepancy between the first data and the second data based on the comparison of the first data to the second data, the determined discrepancy relating to the presence of an object in the surrounding of the vehicle (1).

4. The method (100) of claim 3, the method (100) further comprising:
- identifying an external attack against the detection system (30) of the first vehicle (1) based on the determined discrepancy.

5. The method (100) of claim 3 or 4, the method (100) further comprising:
- providing the identified discrepancy for transmittal to the second vehicle (2).

6. The method (100) of any one of the previous claims, the method (100) further comprising:
- providing the first data for transmittal to the second vehicle (2).

7. The method (100) of any one of the previous claims, the second data being from detection systems (30) of multiple second vehicles (2).

8. The method (100) of any one of the previous claims, the second data being directly received from the second vehicle (2).

9. The method (100) of any one of the previous claims, the first data being based on at least two different detection units (32, 34) of the detection system (30) of the first vehicle (1), the at least two different detection units (32, 34) being a camera detection unit and a LiDAR detection unit or a radar detection unit.

10. The method (100) of claim 9, the method (100) further comprising:
- verifying individual data of the first data, the individual data being from each one of the at least two different detection units (32, 34), by comparing the individual data to one another.

11. The method (100) of any one of the previous claims, the second data being at least partially anonymized.

12. The method (100) of claim 11, the at least partially anonymized second data comprising at least partially anonymized number plates of vehicles (1, 2) as objects (3) in the surrounding and/or at least partially anonymized faces of persons as objects (3) in the surrounding.

13. A method (200) configured to provide first data from a detection system (30) of a first vehicle (1) to a second vehicle (2), the method (200) comprising:
- receiving first data from the detection system (30) of the first vehicle (1), the first data being indicative of one or more objects (3) in a surrounding of the vehicle (1), and the first data being at least partially based on a detection of the one or more objects (3) in the surrounding of the first vehicle (1) at randomized detection times of the detection system (30), and
- providing the received first data for transmittal to the second vehicle (2).

14. A computer program product (14) comprising instructions which, when the program is executed by a computer, cause the computer to carry out the method (100) of any one of claims 1 to 12 or the method (200) of claim 13.

15. A data processing apparatus (10) comprising means (12, 14) for carrying out the method (100) of any one of claims 1 to 12 or the method (200) of claim 13.

## Amended claims

### Amended claims in accordance with Rule 137(2) EPC.

1. A method (100) for enabling verification of first data from a detection system (30) of a first vehicle (1), the method (100) comprising:
- receiving the first data from the detection system (30) of the first vehicle (1), the first data being indicative of one or more objects (3) in a surrounding of the first vehicle (1), and the first data being at least partially based on a detection of the one or more objects (3) in the surrounding of the first vehicle (1) at randomized detection times of the detection system (30) of the first vehicle (1),
- receiving second data from a detection system (30) of a second vehicle (2), the second data being indicative of one or more objects (3) in the surrounding of the first vehicle (1), and
- comparing the first data to the second data.

2. The method (100) of claim 1, the randomized detection times being based on a randomization of the timing of signals sent out by a LiDAR detection unit or radar detection unit of the detection system (30).

3. The method (100) of claim 1 or 2, the comparing of the first data to the second data comprising determining a discrepancy between the first data and the second data based on the comparison of the first data to the second data, the determined discrepancy relating to the presence of an object in the surrounding of the vehicle (1).

4. The method (100) of claim 3, the method (100) further comprising:
- identifying an external attack against the detection system (30) of the first vehicle (1) based on the determined discrepancy.

5. The method (100) of claim 3 or 4, the method (100) further comprising:
- providing the identified discrepancy for transmittal to the second vehicle (2).

6. The method (100) of any one of the previous claims, the method (100) further comprising:
- providing the first data for transmittal to the second vehicle (2).

7. The method (100) of any one of the previous claims, the second data being from detection systems (30) of multiple second vehicles (2).

8. The method (100) of any one of the previous claims, the second data being directly received from the second vehicle (2).

9. The method (100) of any one of the previous claims, the first data being based on at least two different detection units (32, 34) of the detection system (30) of the first vehicle (1), the at least two different detection units (32, 34) being a camera detection unit and a LiDAR detection unit or a radar detection unit.

10. The method (100) of claim 9, the method (100) further comprising:
- verifying individual data of the first data, the individual data being from each one of the at least two different detection units (32, 34), by comparing the individual data to one another.

11. The method (100) of any one of the previous claims, the second data being at least partially anonymized.

12. The method (100) of claim 11, the at least partially anonymized second data comprising at least partially anonymized number plates of vehicles (1, 2) as objects (3) in the surrounding and/or at least partially anonymized faces of persons as objects (3) in the surrounding.

13. A method (200) configured to provide first data from a detection system (30) of a first vehicle (1) to a second vehicle (2), the method (200) comprising:
- receiving first data from the detection system (30) of the first vehicle (1), the first data being indicative of one or more objects (3) in a surrounding of the vehicle (1), and the first data being at least partially based on a detection of the one or more objects (3) in the surrounding of the first vehicle (1) at randomized detection times of the detection system (30), and
- providing the received first data for transmittal to the second vehicle (2).

14. A computer program product (14) comprising instructions which, when the program is executed by a computer, cause the computer to carry out the method (100) of any one of claims 1 to 12 or the method (200) of claim 13.

15. A data processing apparatus (10) comprising means (12, 14) for carrying out the method (100) of any one of claims 1 to 12 or the method (200) of claim 13.
